# EUROPÄISCHE PATENTSCHRIFT

(11) **EP 4 275 478 B1**
(45) Veröffentlichungstag und Bekanntmachung des Hinweises auf die Patenterteilung: **18.11.2026**
(21) Anmeldenummer: 23161708.5
(22) Anmeldetag: 14.03.2023
(51) Int. Cl.: A01F 15/07, A01F 15/08

(54) **VERFAHREN ZUM BETREIBEN EINER RUNDBALLENPRESSE SOWIE RUNDBALLENPRESSE**
METHOD FOR OPERATING A ROUND BALER AND ROUND BALER
PROCÉDÉ DE FONCTIONNEMENT D'UNE PRESSE À BALLES RONDES AINSI QUE PRESSE À BALLES RONDES

(30) Priorität: 11.05.2022 DE 102022111818
(43) Veröffentlichungstag der Anmeldung: 15.11.2023
(73) Patentinhaber: Usines CLAAS France S.A.S, 57140 St. Rémy / Woippy (FR)
(72) Erfinder: Fuchs, Volker, 54439 Saarburg (DE); Wucher, Renaud, 57070 Metz (FR); Dubois, Romain, 57000 Metz (FR)
(74) Vertreter: CLAAS Gruppe

(56) Entgegenhaltungen:
- WO-A1-2021/001456
- DE-A1- 19 856 977
- US-A- 4 391 187
- US-A- 4 611 535
- US-B2- 11 026 371

## Beschreibung

Die vorliegende Erfindung betrifft ein Verfahren zum Betreiben einer Rundballenpresse gemäß dem Oberbegriff des Anspruches 1 sowie eine Rundballenpresse gemäß dem Oberbegriff des Anspruches 11.

Bei herkömmlichen variablen Rundballenpressen gibt eine Bedienperson einer die Rundballenpresse über eine landwirtschaftliche Fläche schleppenden Zugmaschine vor einer Inbetriebnahme der Rundballenpresse üblicherweise mittels einer Bedieneinheit einen Verdichtungsdrucksollwert und einen Ballenanfangsdurchmesser vor. Der Verdichtungsdrucksollwert gibt den Verdichtungsdruck an, mit dem der Rundballen in der variablen Presskammer der Ballenpresse gebildet werden soll. Der Ballenanfangsdurchmesser definiert den Durchmesser, ab dem der Rundballen während des Verdichtungsvorgangs in der Presskammer mit dem vorgegebenen Verdichtungsdruck beaufschlagt werden soll.

Ein Verfahren zum Betreiben einer Rundballenpresse sowie eine Rundballenpresse sind aus der DE 198 56 977 A1 und aus der US 11 026 371 B2 bekannt. Darin ist ein Verfahren zum Betreiben einer Rundballenpresse mit einer in einem Gehäuse angeordneten, einen variablen Durchmesser aufweisenden Presskammer, die von einem endlos umlaufenden Pressmittel begrenzt wird, beschrieben. Das Pressmittel wird von mehreren Rollen geführt. Hierzu wird eine Schlaufe des Pressmittels mit einem gehäuseseitig schwenkbar gelagerten Spannarm, welcher presskammerseitig Rollen aufweist, geführt. Der Spannarm wird durch hydraulisch betätigte Aktoren in seiner Position verstellt, so dass zumindest ein Verdichtungsdruck erzeugt wird, mit welchem das Pressmittel zur Formung eines Rundballens wirkt. Bei einer reduzierten Gutzufuhr sieht das Verfahren gemäß der DE 198 56 977 A1 vor, dass der Verdichtungsdruck während der Ballenbildung bei unterbrochener oder relativ geringer Gutzufuhr in die variable Presskammer selbsttätig erhöht wird. Hierzu werden ein unterer Grenzwert und ein oberer Grenzwert für ein Antriebsmoment durch eine Bedienperson vorgegeben, wobei bei einem Überschreiten des unteren Grenzwertes des Antriebsmomentes der Verdichtungsdruck erhöht wird. Der obere Grenzwert des Antriebsmomentes bildet die Grenze bis zu welcher der Verdichtungsdruck maximal erhöht werden soll. Das Verfahren gemäß der DE 198 56 977 A1 reagiert auf Schwankungen in der Gutzufuhr mit Änderungen des Verdichtungsdrucks. Die automatische Änderung des Verdichtungsdruckes durch die Rundballenpresse berücksichtigt nur eine Änderung der Beschickung. Weitere Betriebsparametern und/oder Umgebungsparametern der Rundballenpresse, die Einfluss auf den Herstellvorgang haben, bleiben bei diesem Verfahren unberücksichtigt. Es obliegt der Bedienperson die Betriebsparameter der Ballenpresse einzustellen bzw. zu variieren, falls sich die Umgebungsbedingungen während des Betriebs der Rundballenpresse ändern. Eine Nichtvornahme solcher Einstellungen führt dazu, dass die Rundballenpresse nur mit mäßiger oder geringer Effizienz betrieben wird.

Eine Rundballenpresse mit den oberbegrifflichen Merkmalen des Anspruches 11 ist aus der EP 3 298 881 A1 bekannt.

Der Erfindung liegt somit die Aufgabe zugrunde, ein Verfahren zum Betreiben einer Rundballenpresse sowie eine Rundballenpresse in der Weise weiterzubilden, dass sich ein effizienterer Betrieb der Rundballenpresse erreichen lässt.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale des nebengeordneten Anspruchs 11. Die hierauf jeweils folgenden abhängigen Ansprüche geben jeweils vorteilhafte Weiterbildungen der Erfindung wieder.

Gemäß dem Anspruch 1 wird ein Verfahren zum Betreiben einer Rundballenpresse mit einer in einem Gehäuse angeordneten, einen variablen Durchmesser aufweisenden Presskammer, die von einem endlos umlaufenden Pressmittel begrenzt wird, vorgeschlagen. Das Pressmittel wird von mehreren eine Antriebsrolle, welche eine Antriebskraft auf das Pressmittel überträgt, umfassenden Rollen angetrieben und/geführt, wobei mit einem gehäuseseitig schwenkbar gelagerten ersten Spannarm, welcher presskammerseitig Rollen aufweist, eine Schlaufe des Pressmittels geführt wird, und mit einem gehäuseseitig schwenkbar gelagerten zweiten Spannarm, welcher an einem freien Ende mindestens eine Rolle aufweist, das Pressmittel geführt wird. Der erste Spannarm und der zweite Spannarm werden durch hydraulisch betätigte Aktoren in ihrer Position verstellt, so dass zumindest ein Verdichtungsdruck erzeugt wird, mit welchem das Pressmittel zur Formung eines Rundballens wirkt. Erfindungsgemäß ist vorgesehen, dass in Abhängigkeit zumindest eines durch eine Steuereinheit der Rundballenpresse vorgegebenen Verdichtungsleistungsverlaufes die Aktoren zur Einstellung der beiden Spannarme automatisch angesteuert werden und unter Berücksichtigung von den Verdichtungsleistungsverlauf beeinflussenden Betriebsparametern und/oder Umgebungsparametern der Rundballenpresse während des Formungsvorgangs ein im Wesentlichen stabiler Betriebspunkt, in dem benötigte Verdichtungsleistung und verfügbare Antriebsleistung , welche sich aus dem Produkt der Antriebskraft und einer Geschwindigkeit mit der die Antriebsrolle angetrieben wird bestimmt, im Wesentlichen gleich sind, eingehalten wird. Hierdurch wird ein optimierter Betrieb der Ballenpresse gewährleistet, wobei die gewünschten Eigenschaften des Rundballens erzielt werden, unabhängig davon, ob sich Betriebs- und/oder Umgebungsparameter während des Betriebs verändern, und ohne, dass eine Bedienperson hier selbst tätig werden muss. Es wird stets automatisch ein gewähltes Verdichtungsverhältnis beibehalten und zwar auch dann, wenn sich Umgebungsbedingungen während des Betriebes der Rundballenpresse verändern. Betriebsparametern und/oder Umgebungsparametern der Rundballenpresse umfassen unterschiedliche Feuchtigkeitsgehalte des zu verdichtenden Erntegutes ebenso wie Schwankungen in der zugeführten Erntegutmenge.

Insbesondere können mittels einer Eingabe-Ausgabeeinheit der Steuereinheit Eingangsgrößen durch eine Bedienperson vorgegeben werden, um in Abhängigkeit von den Eingangsgrößen den vorzugebenden Verdichtungsleistungsverlauf aus in einer Speichereinheit der Steuereinheit hinterlegten Verdichtungsleistungsverläufen zu bestimmen.

Hierzu können als Eingangsgrößen eine Erntegutart, eine Ballenform, Ballendurchmesser sowie absolute oder relative Werte für Verdichtungsdrücke vorgegeben werden. Dabei kann die Eingabe für Ballendurchmesser einen Ballenanfangsdurchmesser und einen Ballenenddurchmesser als Minimal- und Maximalwert umfassen. In Abhängigkeit von der Ballenform kann die Eingabe absolute oder relative Werte für die Verdichtungsdrücke umfassen, die den Werten für den Ballenanfangsdurchmesser und den Ballenenddurchmesser zugeordnet werden. Mögliche Ballenformen sind ein Weichkernballen oder ein Hartballen. Im Fall von Hartballen werden bevorzugt relative Werte für die Verdichtungsdrücke eingegeben, während im Fall des Weichkernballens bevorzugt absolute Werte für die Verdichtungsdrücke eingegeben werden.

Des Weiteren kann mittels der Eingangsgrößen rezeptbasierend die Zielvorgabe für den Verdichtungsdruck in Abhängigkeit vom aktuellen Durchmesser bestimmt werden. Rezeptbasierend heißt in diesem Zusammenhang, dass die Steuereinheit die Eingangsgrößen für die ballenformspezifische Herstellung des Ballens, d.h. einen Weichkernballen oder einen Hartballen, anhand von hinterlegten Rezepten respektive Regelwerken automatisch in einen vom aktuellen Durchmesser abhängigen Verdichtungsleistungsverlauf umrechnen kann. Diese Rezepte ändern dann die Zielvorgabe für die Verdichtungslast in Abhängigkeit vom aktuellen Durchmesser des herzustellenden Ballens.

Bevorzugt können automatisch unter Berücksichtigung der Betriebsparameter und/oder der Umgebungsparameter die durch die Aktoren dynamisch auf die beiden Spannarme aufzubringenden Kräfte berechnet werden.

Insbesondere können zur Ansteuerung der Aktoren für eine Einstellung der Kräfteverhältnisse der Spannarme in der Speichereinheit der Steuereinheit hinterlegte Kennlinienfelder verwendet werden.

Bevorzugt können Arbeitsdrücke der Aktoren eines jeden Spannarmes durch jeweils ein Druckbegrenzungsventil überwacht werden. Gegenüber der aus dem Stand der Technik bekannten Lösung, welche zur Überwachung der Kraftkopplung der beiden Spannarme im hydraulischen Verdichtungskreislauf ein gemeinsames Druckbegrenzungsventil zur Steuerung des Verdichtungsdruckes vorsieht, werden gemäß dieser Ausführungsform zwei Druckbegrenzungsventile verwendet, welche es ermöglichen, mittels eines Steueralgorithmus das Kräftegleichgewicht zwischen den beiden Spannarmen zur Spannung des Pressmittels zu steuern.

Weiter bevorzugt kann das Auftreten von Schlupf durch die Steuereinheit überwacht werden. Das Auftreten von Schlupf zwischen dem Pressmittel und einer der Rollen, insbesondere einer dem Antrieb dienenden Rolle, stellt eine kritische Betriebssituation dar, welcher durch die Überwachung begegnet werden kann.

Als Reaktion auf das Auftreten von Schlupf kann durch die Steuereinheit bei Erreichen eines Schlupfgrenzwertes die Verdichtungsleistung automatisch reduziert werden.

Weiterhin kann durch die Steuereinheit bei Erreichen eines Schlupfgrenzwertes automatisch ein Warnhinweis an die Bedienperson ausgegeben werden. Hierzu kann von der Steuereinheit die Eingabe-Ausgabeeinheit angesteuert werden, um einen entsprechenden optischen und/oder akustischen Warnhinweis zu generieren.

Weiterhin wird die eingangs gestellte Aufgabe durch eine Rundballenpresse gemäß dem nebengeordneten Anspruch 11 gelöst.

Gemäß dem nebengeordneten Anspruch 11 wird eine Rundballenpresse mit einer in einem Gehäuse angeordneten, einen variablen Durchmesser aufweisenden Presskammer vorgeschlagen, wobei die Presskammer von einem endlos umlaufenden Pressmittel begrenzt ist. Es sind mehrere Rollen vorgesehen, welche das Pressmittel antreiben und/oder führen, mit einem gehäuseseitig schwenkbar gelagerten ersten Spannarm, welcher presskammerseitig Rollen zur Führung einer Schlaufe aufweist, und mit einem gehäuseseitig schwenkbar gelagerten zweiten Spannarm, welcher an einem freien Ende mindestens eine Rolle zur Führung des Pressmittels aufweist, wobei zur Erzeugung eines Verdichtungsdruckes, mit welchem das Pressmittel zur Formung eines Rundballens wirkt, hydraulisch betätigte Aktoren zur Verstellung der Position des ersten Spannarms und des zweiten Spannarms vorgesehen sind, wobei eine Steuereinheit der Rundballenpresse dazu eingerichtet ist, in Abhängigkeit zumindest eines durch die Steuereinheit vorgegebenen Verdichtungsleistungsverlaufes die Aktoren zur Einstellung der Spannarme automatisch anzusteuern und unter Berücksichtigung von den Verdichtungsleistungsverlauf beeinflussenden Betriebsparametern und/oder Umgebungsparametern der Rundballenpresse während des Formungsvorgangs einen im Wesentlichen stabilen Betriebspunkt, in dem benötigte Verdichtungsleistung und verfügbare Antriebsleistung im Wesentlichen gleich sind, einzuhalten. Auf alle Ausführungen zu dem vorschlagsgemäßen Verfahren zum Betreiben der Ballenpresse darf verwiesen werden.

Insbesondere kann die Steuereinheit eine Eingabe-Ausgabeeinheit umfassen, welche zur Eingabe von Eingangsgrößen durch eine Bedienperson eingerichtet ist.

Dabei kann die Eingabe-Ausgabeeinheit zur Eingabe von Erntegutart, Ballenform, Ballendurchmesser sowie absoluten oder relativen Werten für Verdichtungsdrücke als Eingangsgrößen eingerichtet sein. Bevorzugt können die Eingangsgrößen Ballendurchmesser sowie Verdichtungsdrücke als Bereichsangaben, insbesondere mittels grafisch visualisierter Balkendiagramme, eingestellt werden.

Insbesondere kann die Rundballenpresse Sensoreinrichtungen zur Bestimmung des Feuchtigkeitsgehalts von aufgenommenem Erntegut sowie der aufgenommenen und/oder der Presskammer zugeführten Zuführmenge umfassen. Der Feuchtigkeitsgehalt sowie die Zuführmenge stellen wesentliche Betriebsparameter und/oder Umgebungsparameter dar, die den Ballenformungsprozess beeinflussen. Die Zuführmenge kann beispielsweise durch eine Schichthöhendetektion in einer Aufnahmeeinrichtung der Ballenpresse bestimmt werden.

Die vorliegende Erfindung wird nachstehend anhand eines in den Zeichnungen dargestellten Ausführungsbeispieles näher erläutert.

Es zeigen:
- Fig. 1: eine schematische Darstellung einer Rundballenpresse mit variabler Presskammer in Seitenansicht;
- Fig. 2: eine exemplarische Darstellung eines Teils eines Hydraulikreislaufs der Rundballenpresse;
- Fig. 3: eine schematische Darstellung einer Steuereinheit der Rundballenpresse;
- Fig. 3a: ein durch eine Eingabe-Ausgabeeinheit der Steuereinheit dargestelltes Eingabemenü für die Erntegutart Stroh;
- Fig. 3b: ein durch eine Eingabe-Ausgabeeinheit der Steuereinheit dargestelltes Eingabemenü für die Erntegutart Silage;
- Fig. 4: eine freigeschnittene Antriebsrolle der Rundballenpresse zur Veranschaulichung innerer Kräfte;
- Fig. 5: exemplarisch ein Diagramm mit unterschiedlichen Leistungsstufen einer Antriebsleistung der Ballenpresse;
- Fig. 6: exemplarisch ein Diagramm mit unterschiedlichen Leistungsstufen einer Verdichtungsleistung der Ballenpresse;
- Fig. 7: exemplarisch ein Diagramm, in welchem die Diagramme gemäß den Fig. 5 und 6 zusammengeführt sind; und
- Fig. 8: exemplarisch das Diagramm gemäß Fig. 7, mit kenntlichgemachten nicht nutzbaren Bereichen für Antriebsleitung und Verdichtungsleistung.

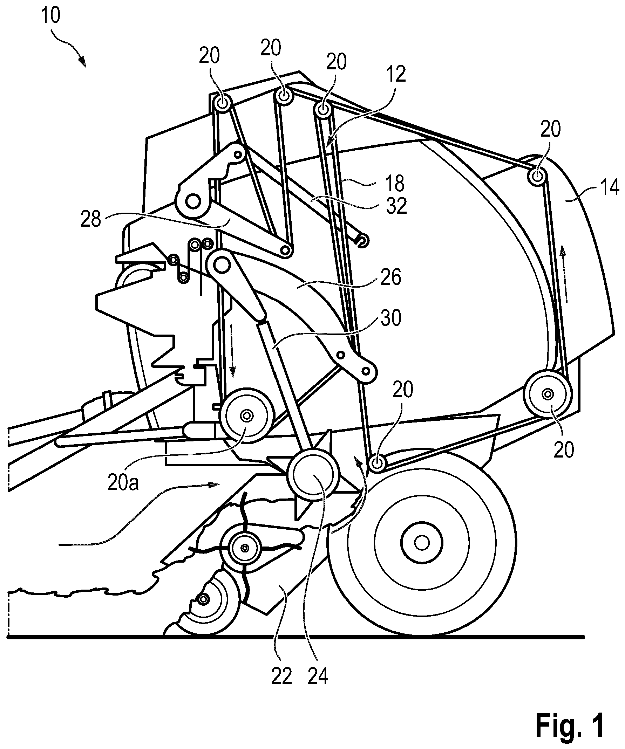

Figur 1 zeigt eine schematische Darstellung einer Rundballenpresse mit variabler Presskammer in Seitenansicht. Die Rundballenpresse 10 weist eine variable Presskammer 12 in einem Gehäuse 14 auf. Zum Pressen eines Rundballens 16 weist die Ballenpresse 10 ein endlos umlaufendes Pressmittel 18 auf. Das Pressmittel 18 kann aus einem oder mehreren Pressriemen oder Ketten gebildet werden. Das Pressmittel 18 wird durch eine Mehrzahl an Rollen 20 geführt, wobei die Rollen 20 ortsfest oder variabel angeordnet sein können. Mit 20a ist eine als ortsfeste Antriebsrolle ausgeführte Rolle bezeichnet, welche eine Antriebskraft F_{D} auf das Pressmittel 18 überträgt. Durch eine Aufnahmeeinrichtung 22 wird Erntegut in der Regel in Form eines Schwads aufgenommen, an einem Rotor 24 entlang geleitet, wobei das Erntegut zerkleinert wird, und in die Presskammer 12 eingeleitet, wo das Erntegut verdichtet und zu einem - nicht dargestellten Rundballen 16 - gepresst wird. Der Rotor 24 kann dabei in die Presskammer 12 hineinragen und mit einem, beispielsweise im Uhrzeigersinn drehenden Rundballen 16, in Kontakt sein und mit diesem mitdrehen. Ein fertig gepresster Rundballen 16 wird üblicherweise vor einem Auswerfen aus der Presskammer 12 mit einem Wickelmaterial, beispielsweise einem Garn oder einem Netz, umwickelt, um den Rundballen 16 zu stabilisieren.

Die Presskammer 12, in der das Erntegut verdichtet wird, wird durch eine wirksame Länge des Pressmittels 18 gebildet. Eine wirksame Länge des Pressmittels 18 ist dabei die Länge des Pressmittels 18, welche die Presskammer 12 umschließt und insbesondere in Kontakt mit einem Rundballen 16 wirkt und eine Presskraft auf diesen überträgt.

Durch eine Verlagerung von Rollen 20 ist die Größe der Presskammer 12 variierbar. Die verlagerbaren Rollen 20 sind dabei jeweils endseitig an einem ersten Spannarm 26 und einem zweiten Spannarm 28 angeordnet. Der erste Spannarm 26 ist dabei gehäuseseitig schwenkbar gelagert und weist an seinem freien Ende zwei Rollen 20 auf, welche eine Schlaufe des Pressmittels 18 führen. Durch eine Veränderung der Position des ersten Spannarmes 26 ist die Größe der Presskammer 12 veränderbar. Durch das weiter in die Presskammer 12 geförderte Erntegut wächst der Rundballen 16 stetig an, wobei der erste Spannarm 28 mit zunehmender Größe der Presskammer 12 und insbesondere zunehmendem Durchmesser des Rundballens 16 ausgelenkt wird. Mit zunehmender Auslenkung des ersten Spannarmes 26 nehmen die Größe der Presskammer 12 und die wirksame Länge des Pressmittels 18 zu. Um einen zu starken Anstieg des Verdichtungsdruckes zu vermeiden, wird über eine Verlagerung des zweiten Spannarmes 28, welcher eine Schlaufe des Pressmittels 18 aufspannt, zusätzlich Pressmittel 18 bereitgestellt. Hierfür wird der zweite Spannarm 28 derart verschwenkt, dass die Schlaufe des Pressmittels 18 verringert wird, und die dadurch verfügbare Länge des Pressmittels 18 als wirksame Länge nutzbar ist. Hierbei sind dem ersten Spannarm 26 zwei hydraulisch betätigte Aktoren 30 und dem zweiten Spannarm 28 ein weiterer hydraulisch betätigter Aktor 32 zugeordnet.

Der Rundballen 16 in der Presskammer 12 wächst mit zunehmender Förderung an Erntegut an, wodurch der erste Spannarm 26 ausgelenkt wird und die wirksame Länge des Pressmittels 18 zunimmt. Die Auslenkung des ersten Spannarmes 26 wird durch ein Druckbegrenzungsventil 34 geregelt, wodurch neben einer Ballenform, Weichkernballen oder Hartballen, auch der Verdichtungsdruck beeinflusst werden kann. Durch das Pressmittel 18 wird auch auf das freie Ende des zweiten Spannarmes 28 eine Kraft ausgeübt, welche aufgrund der dargestellten Anordnung der Rollen 20 ein Verschwenken des zweiten Spannarmes 28 weg von dem ersten Spannarm 26 bewirken kann. Da bei einem Verschwenken des zweiten Spannarmes 28 die dort gebildete Schlaufe des Pressmittels 18 verkleinert wird, nimmt das Pressmittel 18, welches für die wirksame Länge verfügbar ist, zu. Durch das Verschwenken des zweiten Spannarmes 28 kann die Presskraft ebenfalls beeinflusst werden. Die Auslenkung des zweiten Spannarmes 28 wird durch ein weiteres Druckbegrenzungsventil 36 geregelt.

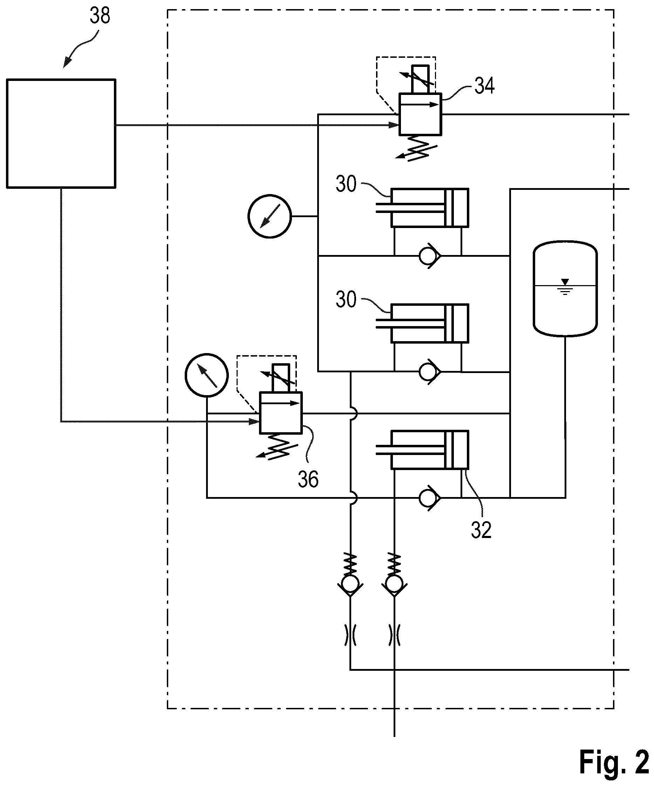

In Fig. 2 ist eine exemplarische Darstellung eines Teils eines Hydraulikreislaufs der Rundballenpresse 10 gezeigt. Der Verdichtungsdruck zur Bildung des Rundballens 16 wird durch das Pressmittel 18 aufgebracht, der mittels des ersten und des zweiten Spannarms 26, 28 verstellt wird. Die Spannarme 26, 28 sind zu deren Verstellung mit den als Hydraulikzylindern ausgeführten Aktoren 30, 32 verbunden, die mit einem Hydraulikfluid entsprechend dem zu erzielenden Verdichtungsdruck beaufschlagt werden. Durch die Druckbegrenzungsventile 34, 36 können entsprechend dem zu erzielenden Verdichtungsdruck erforderliche Druckwerte eingestellt werden. Die Arbeitsdrücke der Aktoren 30, 32 eines jeden Spannarmes 26, 28 werden durch das jeweilige Druckbegrenzungsventil 34, 36 überwacht. Die beiden Druckbegrenzungsventile 34, 36 ermöglichen es, durch einen Kontrollalgorithmus das Kräftegleichgewicht zwischen den Spannarmen 26, 28 zu steuern oder zu regeln. Hierzu weist die Ballenpresse 10 eine Steuereinheit 38 auf, welche dazu eingerichtet ist, für den zu erzielenden Verdichtungsdruck erforderliche Druckwerte an den Druckbegrenzungsventilen 34, 36 einzustellen und den Kontrollalgorithmus auszuführen.

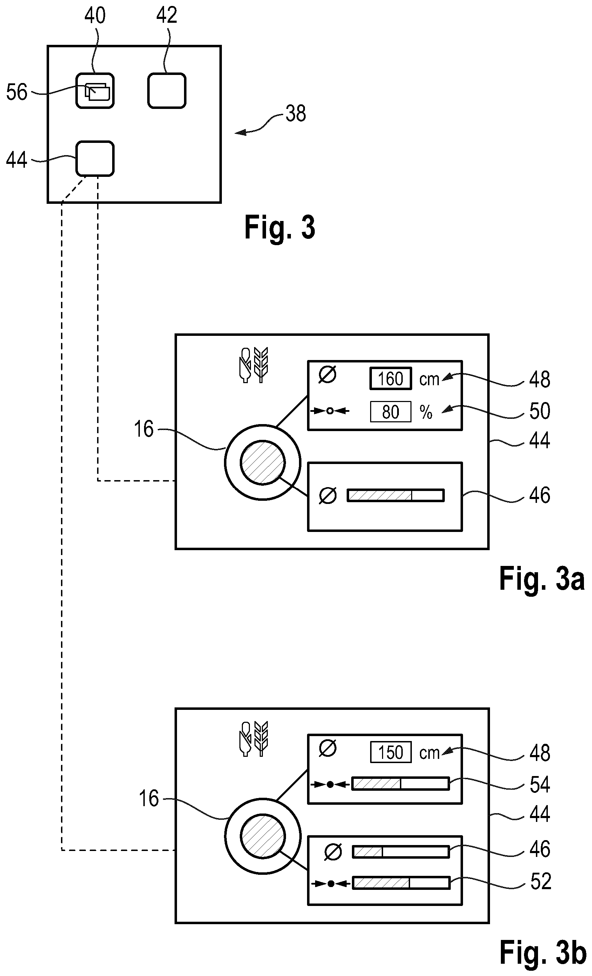

Fig. 3 zeigt schematisch die Steuereinheit 38, welche eine Speichereinheit 40, eine Recheneinheit 42 sowie eine Eingabe-Ausgabeeinheit 44 umfasst. Mittels der Eingabe-Ausgabeeinheit 44 hat eine Bedienperson der Ballenpresse 10 die Möglichkeit, Eingangsgrößen einzugeben, welcher der Herstellung des Ballens 16 zugrunde gelegt werden sollen. Als Eingangsgrößen können eine Erntegutart, eine Ballenform, Ballendurchmesser sowie absolute oder relative Werte für Verdichtungsdrücke vorgegeben werden.

Fig. 3a zeigt beispielhaft ein durch die Eingabe-Ausgabeeinheit 44 dargestelltes Eingabemenü für die Erntegutart Stroh. Als Ballenform ist der Hartballen gewählt. Die Eingabe für Ballendurchmesser umfasst einen Ballenanfangsdurchmesser 46 und einen Ballenenddurchmesser 48 als Minimal- und Maximalwert. Im Fall des Hartballens gemäß Fig. 3a wird bevorzugt ein relativer Werte 50 für den Verdichtungsdruck eingegeben, mit welchem der Ballen beim Erreichen des Ballenenddurchmessers 48 verdichtet werden soll.

Fig. 3b zeigt beispielhaft ein durch die Eingabe-Ausgabeeinheit 44 dargestelltes Eingabemenü für die Erntegutart Silage. Als Ballenform ist der Weichkernballen gewählt. Im Fall des Weichkernballens gemäß Fig. 3b werden bevorzugt absolute Werte 52, 54 für die Verdichtungsdrücke eingegeben. Die Eingabe des relativen Wertes 50 bzw. der absoluten Werte 52, 54 für die Verdichtungsdrücke erfolgt beispielsweise mittels Balkendiagrammen, was insbesondere eine Bereichseingabe der Werte ermöglicht.

Mittels der Eingangsgrößen können rezeptbasierend die Zielvorgabe für den Verdichtungsdruck in Abhängigkeit vom aktuellen Durchmesser des Ballens 16 bestimmt werden.

Um während des Formungsprozesses auf, insbesondere auch sporadisch, auftretende Änderungen von Betriebs- und/oder Umgebungsparametern, beispielsweise unterschiedliche Feuchtigkeitsgehalte des zu verdichtenden Erntegutes oder Schwankungen in der zugeführten Erntegutmenge, reagieren zu können, ist vorgesehen, dass in Abhängigkeit eines durch die Steuereinheit 38 der Rundballenpresse 10 vorgegebenen Verdichtungsleistungsverlaufes 56 die Aktoren 30, 32 zur Einstellung der beiden Spannarm 26, 28 automatisch angesteuert werden und unter Berücksichtigung der Betriebsparameter und/oder Umgebungsparameter der Rundballenpresse 10 auf den Verdichtungsleistungsverlauf 56 während des Formungsvorgangs ein im Wesentlichen stabiler Betriebspunkt 58, 60, in dem benötigte Verdichtungsleistung P_{C} und verfügbare Antriebsleistung P_{D} im Wesentlichen gleich sind, eingehalten wird. In der Speichereinheit 40 können ein oder mehrere Verdichtungsleistungsverläufe 56 hinterlegt sein bzw. werden.

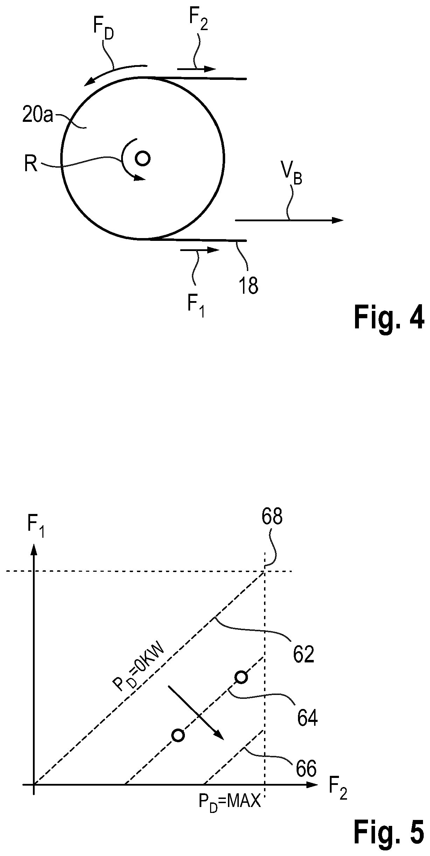

Fig. 4 zeigt die freigeschnittene Antriebsrolle 20a der Rundballenpresse 10 und die an der in Rotationsrichtung R rotierenden Antriebsrolle 20a angreifenden inneren Kräfte F₁, F₂. Das Pressmittel 18 wird mit einer Geschwindigkeit v_{B} angetrieben. Die auf das Pressmittel 18 durch die Antriebsrolle 20a übertragene Antriebskraft F_{D} bestimmt sich, unter Vernachlässigung von Rollenwiderstand und Reibung, aus der Differenz zwischen einer Kraft F₂ am gezogenen Ende des Pressmittels 18 und einer Kraft F₁ am ziehenden Ende des Pressmittels 18. In Fig. 5 ist ein Diagramm dargestellt, in welchem unterschiedliche Leistungsstufen der Antriebsleistung P_{D} für verschiedene Verdichtungsleistungen P_{C} aufgetragen ist. Die Antriebsleistung P_{D} bestimmt sich aus dem Produkt der Antriebskraft F_{D} und der Geschwindigkeit v_{B}, mit der die Antriebsrolle 20a angetrieben wird.

Fig. 5 zeigt exemplarisch ein Diagramm mit unterschiedlichen Leistungsstufen 62, 64, 66, 68 der Antriebsleistung P_{D} der Ballenpresse 10. Die Leistungsstufe 62 entspricht einer Antriebsleistung P_{D} von 0 kW und die Leistungsstufe 68 entspricht einer maximalen Antriebsleistung P_{D}.

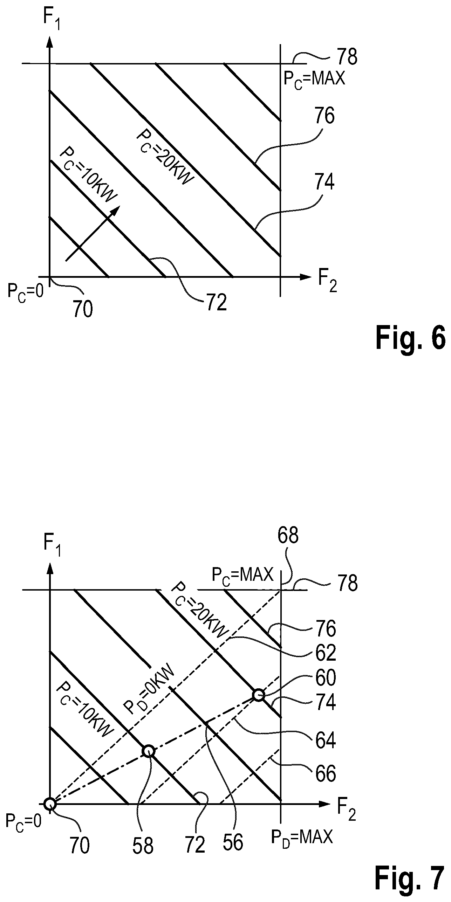

Die Darstellung in Fig. 6 zeigt exemplarisch ein Diagramm mit unterschiedlichen Leistungsstufen 70, 72, 74, 76, 78 der Verdichtungsleistung P_{C} der Ballenpresse 10. Die Leistungsstufe 70 entspricht einer Verdichtungsleistung P_{C} von 0 kW und der Leistungsstufe 78 entspricht einer maximalen Verdichtungsleistung P_{C}. Die in Fig. 6 dargestellten Leistungsstufen 72, 74,76 zwischen der Leistungsstufe 70 und der Leistungsstufe 78 sind beispielhaft zu verstehen. Die Verteilung der Leistungsstufen 72, 74, 76 ändert sich in Abhängigkeit von der Zuführrate mit Erntegut und/oder Änderungen der Umgebungsparameter.

Die Darstellung in Fig. 7 zeigt exemplarisch ein Diagramm, in welchem das Diagramm für Leistungsstufen 62, 64, 66, 68 der Antriebsleistung P_{D} und das Diagramm mit den unterschiedlichen Leistungsstufen 70, 72, 74, 76, 78 der Verdichtungsleistung P_{C} der Ballenpresse zusammengeführt sind, um daraus einen stabilen Betriebspunkt 58, 60 zu ermitteln, in welchem die benötigte Verdichtungsleistung P_{C} und die verfügbare Antriebsleistung P_{D} im Wesentlichen gleich sind.

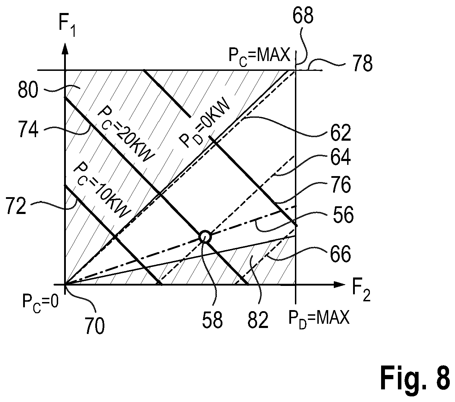

Die Darstellung in Fig. 8 zeigt exemplarisch das Diagramm gemäß Fig. 7, in welchem Bereiche 80, 82 kenntlich durch Schraffur gemacht sind, die aus technischen Gründen den Arbeitsbereich begrenzen. Im Bereich 80 oberhalb der Leistungsstufe 62 steht keine Antriebsleistung zu Verfügung. Innerhalb des Bereichs 82 tritt Schlupf auf, so dass auch dieser Bereich für die Bestimmung eines stabilen Betriebspunktes 58 nicht zur Verfügung steht.

Wie weiter oben bereits ausgeführt, führen Änderungen bei der Zuführung von Erntegut in die Presskammer 12 und/oder Änderungen der Umgebungsparameter wie unterschiedliche Feuchtigkeitsgehalte des zu verdichtenden Erntegutes, dazu, dass sich die Verteilung der Leistungsstufen 72, 74, 76 für die Verdichtungsleistung P_{C} ändert. Die Steuereinheit 38 berücksichtigt diese Veränderungen zyklisch und bestimmt einen neuen stabilen Betriebspunkt 58, der diesen Änderungen Rechnung trägt.

Mittels der Eingabe-Ausgabeeinheit 44 der Steuereinheit 38 werden eine beschränkte Anzahl von Eingangsgrößen durch die Bedienperson vorgegeben, wie anhand der Fig. 3a und Fig. 3b beispielhaft erläutert, um in Abhängigkeit von den Eingangsgrößen den vorzugebenden Verdichtungsleistungsverlauf 56 aus in der Speichereinheit 40 der Steuereinheit 38 hinterlegten Verdichtungsleistungsverläufen 56 zu bestimmen. Bezogen auf Fig. 3a zur Herstellung eines Hartballens als Ballenform des Rundballens 16 werden mittels der Eingangsgrößen rezeptbasierend die Zielvorgabe für den Verdichtungsdruck in Abhängigkeit vom aktuellen Durchmesser des Rundballens 16 bestimmt. Dabei wird bis zum Erreichen des vorgegebenen Ballenanfangsdurchmesser 46 mit einem Anfangsverdichtungsdruck verdichtet. Der als relativer Wert 50 vorgegebene Verdichtungsdruck wird zyklisch bis zum Erreichen des Ballenenddurchmesser 48 auf den eingestellten Verdichtungsdruck erhöht, mit welchem der Rundballen 16 beim Erreichen des Ballenenddurchmessers 48 verdichtet werden soll. Dabei kann eine zyklische Erhöhung, insbesondere eine stufenweise Erhöhung, des Verdichtungsdrucks in Abhängigkeit vom Erreichen eines absoluten oder relativen aktuellen Ballendurchmessers bedeuten. Der stabile Betriebspunkt 58 für die jeweils erforderliche Verdichtungsleistung P_{C} wird entsprechend des vorangehend beschrieben Verfahrens bestimmt, um die Einflüsse von Betriebsparametern und/oder Umgebungsparametern der Rundballenpresse 10 auf den Verdichtungsleistungsverlauf 56 zu berücksichtigen und zu kompensieren.

Analog wird bei der Herstellung eines Weichkernballens als Ballenform des Rundballens 16 verfahren. Hierbei wird bis zum Erreichen des vorgegebenen Ballenanfangsdurchmesser 46 mit einem Anfangsverdichtungsdruck, dem als für den Verdichtungsdruck eingegebenen absoluten Wert 52, verdichtet und anschließend bis zum Erreichen des vorgegebenen Ballenenddurchmesser 48 mit einem Endverdichtungsdruck, dem als für den Verdichtungsdruck eingegebenen absoluten Wert 54. Auch hier kann der stabile Betriebspunkt 58 für die jeweils erforderliche Verdichtungsleistung P_{C} entsprechend des vorangehend beschrieben Verfahrens bestimmt werden, um die Einflüsse von Betriebsparametern und/oder Umgebungsparametern der Rundballenpresse 10 auf den Verdichtungsleistungsverlauf 56 zu berücksichtigen und zu kompensieren.

### Bezugszeichenliste

| | | | |
|---|---|---|---|
| 10 | Rundballenpresse | 74 | Leistungsstufe |
| 12 | Presskammer | 76 | Leistungsstufe |
| 14 | Gehäuse | 78 | Leistungsstufe |
| 16 | Rundballen | 80 | Bereich |
| 18 | Pressmittel | 82 | Bereich |
| 20 | Rolle | | |
| 20a | Antriebsrolle | F₁ | Kraft |
| 22 | Aufnahmeeinrichtung | F₂ | Kraft |
| 24 | Rotor | F_{D} | Antriebskraft |
| 26 | Erster Spannarm | P_{C} | Verdichtungsleistung |
| 28 | Zweiter Spannarm | P_{D} | Antriebsleistung |
| 30 | Aktor | V_{B} | Geschwindigkeit |
| 32 | Aktor | R | Rotationsrichtung |
| 34 | Druckbegrenzungsventil | | |
| 36 | Druckbegrenzungsventil | | |
| 38 | Steuereinheit | | |
| 40 | Speichereinheit | | |
| 42 | Recheneinheit | | |
| 44 | Eingabe-Ausgabeeinheit | | |
| 46 | Ballenanfangsdurchmesser | | |
| 48 | Ballenenddurchmesser | | |
| 50 | Relativer Wert für Verdichtungsdruck | | |
| 52 | Absoluter Wert für Verdichtungsdruck | | |
| 54 | Absoluter Wert für Verdichtungsdruck | | |
| 56 | Verdichtungsleistungsverlauf | | |
| 58 | Stabiler Betriebspunkt | | |
| 60 | Stabiler Betriebspunkt | | |
| 62 | Leistungsstufe | | |
| 64 | Leistungsstufe | | |
| 66 | Leistungsstufe | | |
| 68 | Leistungsstufe | | |
| 70 | Leistungsstufe | | |
| 72 | Leistungsstufe | | |

## Patentansprüche

1. Verfahren zum Betreiben einer Rundballenpresse (10) mit einer in einem Gehäuse (14) angeordneten, einen variablen Durchmesser aufweisenden Presskammer (12), die von einem endlos umlaufenden Pressmittel (18) begrenzt wird, wobei das Pressmittel (18) von mehreren eine Antriebsrolle (20a), welche eine Antriebskraft (F_{D}) auf das Pressmittel (18) überträgt, umfassenden Rollen (20) angetrieben und/oder geführt wird, wobei mit einem gehäuseseitig schwenkbar gelagerten ersten Spannarm (26), welcher presskammerseitig Rollen (20) aufweist, eine Schlaufe des Pressmittels (18) geführt wird, und dass mit einem gehäuseseitig schwenkbar gelagerten zweiten Spannarm (28), welcher an einem freien Ende mindestens eine Rolle (20) aufweist, das Pressmittel (18) geführt wird, wobei der erste Spannarm (26) und der zweite Spannarm (28) durch hydraulisch betätigte Aktoren (30, 32) in ihrer Position verstellt werden, so dass zumindest ein Verdichtungsdruck erzeugt wird, mit welchem das Pressmittel (18) zur Formung eines Rundballens (16) wirkt, **dadurch gekennzeichnet, dass** in Abhängigkeit zumindest eines durch eine Steuereinheit (38) der Rundballenpresse (10) vorgegebenen Verdichtungsleistungsverlaufes (56) die Aktoren (30, 32) zur Einstellung des zumindest einen Spannarms (26, 28) automatisch angesteuert werden und unter Berücksichtigung von den Verdichtungsleistungsverlauf (56) beeinflussenden Betriebsparametern und/oder Umgebungsparametern der Rundballenpresse (10) während des Formungsvorgangs ein im Wesentlichen stabiler Betriebspunkt (58), in dem benötigte Verdichtungsleistung (P_{C}) und verfügbare Antriebsleistung (P_{D}), welche sich aus dem Produkt der Antriebskraft (F_{D}) und einer Geschwindigkeit (v_{B}), mit der die Antriebsrolle (20a) angetrieben wird, bestimmt, im Wesentlichen gleich sind, eingehalten wird.

2. Verfahren nach Anspruch 1, **dadurch gekennzeichnet, dass** mittels einer Eingabe-Ausgabeeinheit (44) der Steuereinheit (38) Eingangsgrößen durch eine Bedienperson vorgegeben werden, um in Abhängigkeit von den Eingangsgrößen den vorzugebenden Verdichtungsleistungsverlauf (56) aus in einer Speichereinheit (40) der Steuereinheit (38) hinterlegten Verdichtungsleistungsverläufen (56) zu bestimmen.

3. Verfahren nach Anspruch 2, **dadurch gekennzeichnet, dass** als Eingangsgrößen eine Erntegutart, eine Ballenform, Ballendurchmesser (46, 48) sowie absolute oder relative Werte (50, 52, 54) für Verdichtungsdrücke vorgegeben werden.

4. Verfahren nach Anspruch 2 oder 3, **dadurch gekennzeichnet, dass** mittels der Eingangsgrößen rezeptbasierend die Zielvorgabe für den Verdichtungsdruck in Abhängigkeit vom aktuellen Durchmesser des Ballens (16) bestimmt wird.

5. Verfahren nach einem der vorangehenden Anspruch, **dadurch gekennzeichnet, dass** automatisch unter Berücksichtigung der Betriebsparameter und/oder der Umgebungsparameter die durch die Aktoren (30, 32) dynamisch auf die beiden Spannarme (26, 28) aufzubringenden Kräfte berechnet werden.

6. Verfahren nach einem der vorangehenden Anspruch, **dadurch gekennzeichnet, dass** zur Ansteuerung der Aktoren (30, 32) für eine Einstellung der Kräfteverhältnisse der Spannarme (26, 28) in der Speichereinheit (40) der Steuereinheit (38) hinterlegte Kennlinienfelder verwendet werden.

7. Verfahren nach einem der vorangehenden Anspruch, **dadurch gekennzeichnet, dass** Arbeitsdrücke der Aktoren (30, 32) eines jeden Spannarmes (26, 28) durch jeweils ein Druckbegrenzungsventil (34, 36) überwacht werden.

8. Verfahren nach einem der vorangehenden Anspruch, **dadurch gekennzeichnet, dass** das Auftreten von Schlupf durch die Steuereinheit (38) überwacht wird.

9. Verfahren nach Anspruch 8, **dadurch gekennzeichnet, dass** durch die Steuereinheit (38) bei Erreichen eines Schlupfgrenzwertes die Verdichtungsleistung (P_{C}) automatisch reduziert wird.

10. Verfahren nach Anspruch 9, **dadurch gekennzeichnet, dass** durch die Steuereinheit (38) bei Erreichen eines Schlupfgrenzwertes automatisch ein Warnhinweis an die Bedienperson ausgegeben wird.

11. Rundballenpresse (10) mit einer in einem Gehäuse (14) angeordneten, einen variablen Durchmesser aufweisenden Presskammer (12), die von einem endlos umlaufenden Pressmittel (18) begrenzt ist, mit mehreren eine Antriebsrolle (20a), welche eine Antriebskraft (F_{D}) auf das Pressmittel (18) überträgt, umfassenden Rollen (20), welche das Pressmittel (18) antreiben und/oder führen, mit einem gehäuseseitig schwenkbar gelagerten ersten Spannarm (26), welcher presskammerseitig Rollen (20) zur Führung einer Schlaufe aufweist, und mit einem gehäuseseitig schwenkbar gelagerten zweiten Spannarm (28), welcher an einem freien Ende mindestens eine Rolle (20) zur Führung des Pressmittels (18) aufweist, wobei zur Erzeugung eines Verdichtungsdruckes, mit welchem das Pressmittel (18) zur Formung eines Rundballens (16) wirkt, hydraulisch betätigte Aktoren (30, 32) zur Verstellung der Position des ersten Spannarms (26) und des zweiten Spannarms (28) vorgesehen sind, **dadurch gekennzeichnet, dass** eine Steuereinheit (38) der Rundballenpresse (10) dazu eingerichtet ist, in Abhängigkeit zumindest eines durch die Steuereinheit (38) vorgegebenen Verdichtungsleistungsverlaufes (56) die Aktoren (30,32) zur Einstellung der Spannarme (26, 28) automatisch anzusteuern und unter Berücksichtigung von den Verdichtungsleistungsverlauf (56) beeinflussenden Betriebsparametern und/oder Umgebungsparametern der Rundballenpresse (10) während des Formungsvorgangs einen im Wesentlichen stabilen Betriebspunkt (58), in dem benötigte Verdichtungsleistung (P_{C}) und verfügbare Antriebsleistung (P_{D}), welche sich aus dem Produkt der Antriebskraft (F_{D}) und einer Geschwindigkeit (v_{B}), mit der die Antriebsrolle (20a) angetrieben wird, bestimmt, im Wesentlichen gleich sind, einzuhalten.

12. Rundballenpresse (10) nach Anspruch 11, **dadurch gekennzeichnet, dass** die Steuereinheit (38) eine Eingabe-Ausgabeeinheit (44) umfasst, welche zur Eingabe von Eingangsgrößen durch eine Bedienperson eingerichtet ist.

13. Rundballenpresse (10) nach Anspruch 12, **dadurch gekennzeichnet, dass** die Eingabe-Ausgabeeinheit (44) zur Eingabe von Erntegutart, Ballenform, Ballendurchmesser (46, 48) sowie absoluten oder relativen Werten (50, 52,54) für Verdichtungsdrücke als Eingangsgrößen eingerichtet ist.

14. Rundballenpresse (10) nach Anspruch 12 oder 13, **dadurch gekennzeichnet, dass** die Steuereinheit (38) dazu eingerichtet ist, in Abhängigkeit von den Eingangsgrößen den vorzugebenden Verdichtungsleistungsverlauf (56) aus in einer Speichereinheit (40) der Steuereinheit (38) hinterlegten Verdichtungsleistungsverläufen (56) zu bestimmen.

15. Rundballenpresse (10) nach einem der Ansprüche 11 bis 14, **dadurch gekennzeichnet, dass** die Rundballenpresse (10) Sensoreinrichtungen zur Bestimmung des Feuchtigkeitsgehalts von aufgenommenem Erntegut sowie der aufgenommenen und/oder der Presskammer zugeführten Zuführmenge umfasst.

## Claims

1. Method for operating a round baler (10) having a baling chamber (12) which is arranged in a housing (14), has a variable diameter and is delimited by an endlessly revolving baling means (18), wherein the baling means (18) is driven and/or guided by a plurality of rollers (20) which comprise a drive roller (20a) that transmits a driving force (F_{D}) to the baling means (18), wherein a loop of the baling means (18) is guided by way of a first clamping arm (26) which is pivotably mounted on the housing and on the side of the baling chamber has rollers (20), the baling means (18) being guided by way of a second clamping arm (28) which is pivotably mounted on the housing and on a free end has at least one roller (20), wherein the first clamping arm (26) and the second clamping arm (28) are adjusted in terms of their position by hydraulically activated actuators (30, 32) in such a way that at least a compression pressure is generated by way of which the baling means (18) acts in order to form a round bale (16), **characterized in that**, as a function of at least one compression output profile (56) predefined by a control unit (38) of the round baler (10), the actuators (30, 32) are automatically actuated in order to adjust the at least one clamping arm (26, 28) and, while taking into account operating parameters and/or environmental parameters of the round baler (10) that influence the compression output profile (56) during the forming procedure, a substantially stable operating point (58), at which the required compression output (P_{C}) and the available drive output (P_{D}), determined from the product of the driving force (F_{D}) and a speed (v_{B}) at which the drive roller (20a) is driven, are substantially identical, is maintained.

2. Method according to Claim 1, **characterized in that** input variables are predefined by an operator by means of an input/output unit (44) of the control unit (38) in order to determine the compression output profile (56) to be predefined on the basis of the input variables from compression output profiles (56) stored in a memory unit (40) of the control unit (38).

3. Method according to Claim 2, **characterized in that** a crop type, a bale shape, bale diameters (46, 48) and absolute or relative values (50, 52, 54) for compression pressures are predefined as input variables.

4. Method according to Claim 2 or 3, **characterized in that**, by means of the input variables, the target specification for the compression pressure is determined based on a recipe as a function of the current diameter of the bale (16).

5. Method according to one of the preceding claims, **characterized in that** the forces to be dynamically applied to the two clamping arms (26, 28) by the actuators (30, 32) are calculated automatically taking into account the operating parameters and/or the ambient parameters.

6. Method according to one of the preceding claims, **characterized in that** characteristic curves stored in the memory unit (40) of the control unit (38) are used to actuate the actuators (30, 32) for setting the force ratios of the clamping arms (26, 28).

7. Method according to one of the preceding claims, **characterized in that** working pressures of the actuators (30, 32) of each clamping arm (26, 28) are monitored by a pressure limiting valve (34, 36) in each case.

8. Method according to one of the preceding claims, **characterized in that** the occurrence of slippage is monitored by the control unit (38).

9. Method according to Claim 8, **characterized in that** the compression output (P_{C}) is automatically reduced by the control unit (38) when a slip limit value is reached.

10. Method according to Claim 9, **characterized in that** a warning message is automatically output to the operator by the control unit (38) when a slip limit value is reached.

11. Round baler (10) having a baling chamber (12) which is arranged in a housing (14), has a variable diameter and is delimited by an endlessly revolving baling means (18), having a plurality of rollers (20) which comprise a drive roller (20a) that transmits a driving force (F_{D}) to the baling means (18), which rollers drive and/or guide the baling means (18), having a first clamping arm (26) which is pivotably mounted on the housing and on the side of the baling chamber has rollers (20) for guiding a loop, and having a second clamping arm (28) which is pivotably mounted on the housing and on a free end has at least one roller (20) for guiding the baling means (18), wherein for generating a compression pressure by way of which the baling means (18) acts in order to form a round bale (16), hydraulically activated actuators (30, 32) are provided for adjusting the position of the first clamping arm (26) and of the second clamping arm (28), **characterized in that** a control unit (38) of the round baler (10), as a function of at least one compression output profile (56) predefined by the control unit (38), is configured to automatically actuate the actuators (30, 32) in order to adjust the clamping arms (26, 28) and, while taking into account operating parameters and/or environmental parameters of the round baler (10) that influence the compression output profile (56) during the forming procedure, to maintain a substantially stable operating point (58), at which the required compression output (P_{C}) and the available drive output (P_{D}), determined from the product of the driving force (F_{D}) and a speed (v_{B}) at which the drive roller (20a) is driven, are substantially identical.

12. Round baler (10) according to Claim 11, **characterized in that** the control unit (38) comprises an input/output unit (44) which is configured for inputting input variables by an operator.

13. Round baler (10) according to Claim 12, **characterized in that** the input/output unit (44) is configured to input crop type, bale shape, bale diameters (46, 48) and absolute or relative values (50, 52, 54) for compression pressures as input variables.

14. Round baler (10) according to Claim 12 or 13, **characterized in that** the control unit (38), as a function of the input variables, is configured to determine the compression output profile (56) to be specified from compression output profiles (56) stored in a memory unit (40) of the control unit (38).

15. Round baler (10) according to one of Claims 11 to 14, **characterized in that** the round baler (10) comprises sensor devices for determining the moisture content of the received crop and of the quantity received and/or fed to the baling chamber.

## Revendications

1. Procédé pour faire fonctionner une presse à balles rondes (10) comprenant une chambre de pressage (12) disposée dans un carter (14) et présentant un diamètre variable, qui est délimitée par un moyen de pressage (18) circulant en boucle sans fin, le moyen de pressage (18) étant entraîné et/ou guidé par plusieurs rouleaux (20) comprenant un rouleau d'entraînement (20a) qui transmet une force d'entraînement (F_{D}) au moyen de pressage (18), une boucle du moyen de pressage (18) étant guidée au moyen d'un premier bras tendeur (26) monté pivotant sur le carter et comportant des rouleaux (20) du côté de la chambre de pressage, et le moyen de pressage (18) étant guidé au moyen d'un second bras tendeur (28) monté pivotant sur le carter et comportant au moins un rouleau (20) à une extrémité libre, les positions du premier bras tendeur (26) et du second bras tendeur (28) étant ajustées par des actionneurs à commande hydraulique (30, 32) de manière à générer au moins une pression de compactage avec laquelle le moyen de pressage (18) agit pour former une balle ronde (16), **caractérisé en ce que** les actionneurs (30, 32) sont commandés automatiquement en fonction d'au moins un profil de puissance de compactage (56) prédéfini par une unité de commande (38) de la presse à balles rondes (10), afin de régler au moins l'un des bras tendeurs (26, 28), et **en ce que**, compte tenu de paramètres de fonctionnement et/ou de paramètres environnementaux de la presse à balles rondes (10) influant sur le profil de puissance de compactage (56), un point de fonctionnement sensiblement stable (58), auquel la puissance de compactage requise (P_{C}) et la puissance d'entraînement disponible (P_{D}), déterminée par le produit de la force d'entraînement (F_{D}) et d'une vitesse (v_{B}) à laquelle le rouleau d'entraînement (20a) est entraîné, sont sensiblement égales, est maintenu pendant le processus de formation.

2. Procédé selon la revendication 1, **caractérisé en ce qu'**une personne utilisatrice définit des grandeurs d'entrée au moyen d'une unité d'entrée-sortie (44) de l'unité de commande (38), afin de sélectionner, en fonction de ces grandeurs d'entrée, le profil de puissance de compactage (56) à prédéfinir parmi des profils de puissance de compactage (56) enregistrés dans une unité de mémoire (40) de l'unité de commande (38).

3. Procédé selon la revendication 2, **caractérisé en ce qu'**un type de matière récoltée, une forme de balle, des diamètres de balle (46, 48) ainsi que des valeurs absolues ou relatives (50, 52, 54) de pressions de compactage sont définis comme grandeurs d'entrée.

4. Procédé selon la revendication 2 ou 3, **caractérisé en ce que** la valeur cible de la pression de compactage est déterminée à partir des grandeurs d'entrée, sur la base d'une recette, en fonction du diamètre actuel de la balle (16).

5. Procédé selon l'une des revendications précédentes, **caractérisé en ce que** les forces à appliquer dynamiquement aux deux bras tendeurs (26, 28) par les actionneurs (30, 32) sont calculées automatiquement en tenant compte des paramètres de fonctionnement et/ou des paramètres environnementaux.

6. Procédé selon l'une des revendications précédentes, **caractérisé en ce que** des cartographies de caractéristiques enregistrées dans l'unité de mémoire (40) de l'unité de commande (38) sont utilisées pour commander les actionneurs (30, 32) afin de régler les rapports de forces des bras tendeurs (26, 28).

7. Procédé selon l'une des revendications précédentes, **caractérisé en ce que** les pressions de service des actionneurs (30, 32) de chacun des bras tendeurs (26, 28) sont surveillées par une soupape de limitation de pression respective (34, 36).

8. Procédé selon l'une des revendications précédentes, **caractérisé en ce que** l'unité de commande (38) surveille l'apparition d'un glissement.

9. Procédé selon la revendication 8, **caractérisé en ce que** l'unité de commande (38) réduit automatiquement la puissance de compactage (P_{C}) lorsqu'une valeur limite de glissement est atteinte.

10. Procédé selon la revendication 9, **caractérisé en ce que** l'unité de commande (38) émet automatiquement un avertissement destiné à la personne utilisatrice lorsqu'une valeur limite de glissement est atteinte.

11. Presse à balles rondes (10) comprenant une chambre de pressage (12) disposée dans un carter (14) et présentant un diamètre variable, qui est délimitée par un moyen de pressage (18) circulant en boucle sans fin, plusieurs rouleaux (20) comprenant un rouleau d'entraînement (20a) qui transmet une force d'entraînement (F_{D}) au moyen de pressage (18), qui entraînent et/ou guident le moyen de pressage (18), un premier bras tendeur (26) monté pivotant sur le carter et comportant, du côté de la chambre de pressage, des rouleaux (20) destinés à guider une boucle, et un second bras tendeur (28) monté pivotant sur le carter et comportant, à une extrémité libre, au moins un rouleau (20) destiné à guider le moyen de pressage (18), des actionneurs à commande hydraulique (30, 32) étant prévus pour ajuster les positions du premier bras tendeur (26) et du second bras tendeur (28) afin de générer une pression de compactage avec laquelle le moyen de pressage (18) agit pour former une balle ronde (16), **caractérisée en ce qu'**une unité de commande (38) de la presse à balles rondes (10) est conçue pour commander automatiquement les actionneurs (30, 32), en fonction d'au moins un profil de puissance de compactage (56) prédéfini par l'unité de commande (38), afin de régler les bras tendeurs (26, 28) et pour maintenir, compte tenu de paramètres de fonctionnement et/ou de paramètres environnementaux de la presse à balles rondes (10) influant sur le profil de puissance de compactage (56), pendant le processus de formation, un point de fonctionnement sensiblement stable (58) auquel la puissance de compactage requise (P_{C}) et la puissance d'entraînement disponible (P_{D}), déterminée par le produit de la force d'entraînement (F_{D}) et d'une vitesse (v_{B}) à laquelle le rouleau d'entraînement (20a) est entraîné, sont sensiblement égales.

12. Presse à balles rondes (10) selon la revendication 11, **caractérisée en ce que** l'unité de commande (38) comprend une unité d'entrée-sortie (44) conçue pour permettre à une personne utilisatrice de saisir des grandeurs d'entrée.

13. Presse à balles rondes (10) selon la revendication 12, **caractérisée en ce que** l'unité d'entrée-sortie (44) est conçue pour permettre la saisie, comme grandeurs d'entrée, d'un type de matière récoltée, d'une forme de balle, de diamètres de balle (46, 48) ainsi que de valeurs absolues ou relatives (50, 52, 54) de pressions de compactage.

14. Presse à balles rondes (10) selon la revendication 12 ou 13, **caractérisée en ce que** l'unité de commande (38) est conçue pour déterminer, en fonction des grandeurs d'entrée, le profil de puissance de compactage (56) à prédéfinir parmi des profils de puissance de compactage (56) enregistrés dans une unité de mémoire (40) de l'unité de commande (38).

15. Presse à balles rondes (10) selon l'une des revendications 11 à 14, **caractérisée en ce que** la presse à balles rondes (10) comprend des dispositifs de détection destinés à déterminer la teneur en humidité de la matière récoltée ramassée ainsi que la quantité de matière ramassée et/ou amenée à la chambre de pressage.
